# EUROPEAN PATENT SPECIFICATION

(11) **EP 3 863 380 B1**
(45) Date of publication and mention of the grant of the patent: **12.06.2024**
(21) Application number: 20155368.2
(22) Date of filing: 04.02.2020
(51) Int. Cl.: H05B 47/115

(54) **METHOD AND ARRANGEMENT FOR AUTOMATIC CONTROL OF LIGHTING IN A PERSONAL LIGHT SPACE**
VERFAHREN UND ANORDNUNG ZUR AUTOMATISCHEN STEUERUNG DER BELEUCHTUNG IN EINEM PERSÖNLICHEN LICHTRAUM
PROCÉDÉ ET AGENCEMENT POUR LE CONTRÔLE AUTOMATIQUE DE L'ÉCLAIRAGE DANS UN ESPACE DE LUMIÈRE PERSONNEL

(43) Date of publication of application: 11.08.2021
(73) Proprietor: Helvar Oy Ab, 02150 Espoo (FI)
(72) Inventor: Hellström, Lars, 02150 Espoo (FI); Juslén, Henri, 02150 Espoo (FI)
(74) Representative: Papula Oy

(56) References cited:
- US-A1- 2012 278 640
- US-A1- 2015 289 347
- US-A1- 2018 177 024

## Description

### FIELD OF THE INVENTION

The invention relates to the field of automatic control of lighting. In particular the invention concerns the task of automatically ensuring optimal lighting conditions within an area on which only one or at most a small number of users are expected to remain relatively stationary for lengthy periods of time. A non-limiting example of such an area is the desk of an office worker.

### BACKGROUND OF THE INVENTION

The brightness, spectral content, and dynamics of lighting have profound effects on the wellbeing of users who spend lengthy periods, such as large portions of working days, relatively stationary at one location. For example, it is not uncommon to see a user repeatedly spend essentially whole working days sitting in the same chair in front of the same computer. Lighting is an important factor for the well-being of such a user: there should be sufficient amounts of light at all times of the day; the colour or colour temperature of the light should follow a suitable circadian rhythm to match inherent biological needs of the user; light of different kind could be used to match different kinds of tasks that the user should perform; and the properties of the light may even change depending on detected user behavior such as temporary signs of tiredness.

In a typical office environment the lighting comes from above, from luminaires either installed in the ceiling structures or hanging from the ceiling. A straightforward solution that could provide userspecific lighting is to equip each desk at the office with control means such as a touch-sensitive control panel that the user can utilize to set the brightness, colour temperature, and other characteristics of the nearest luminaire as needed. The problems of such a solution are related to the users not wanting or not remembering to repeatedly control the lighting, not knowing how to properly use the control means, and/or not knowing what the optimal lighting would be. People tend to take lighting as something that should be automatically right, without the user having to pay attention to controlling it.

Another relatively straightforward solution is to program each luminaire to execute one or more predetermined lighting scenarios, for example so that its colour temperature follows a predetermined circathan pattern and its brightness matches the information given by an associated light sensor. While such an automatic control solution allows the users to fully concentrate on other things than lighting, it may be inflexible in terms of the detailed conditions that prevail at each location. As an example, since light sensors are typically installed in the luminaire itself or at some nearby location in the ceiling, they can only make indirect assumptions of the actual amount of light perceived by users.

A prior art document US 2018/177024 A1 discloses apparatuses, methods and systems for a desktop occupancy sensing device.

A prior art document US 2015/289347 A1 discloses methods for providing personalized lighting to users positioned proximal to one another.

A prior art document US 2012/278640 A1 discloses an occupancy sensing method that includes monitoring a space associated with a computer workstation for an occupant.

### SUMMARY

It is an objective to provide a method and an arrangement that can be used to automatically provide advantageous lighting conditions for users who remain relatively stationary in an illuminated environment. Another objective is to enable said method and arrangement to adapt to different configurations of said illuminated environment. A further objective is to allow combining the method and arrangement with other ways of controlling the lighting.

These and further advantageous objectives are achieved by using a distance sensor installed in the illuminated environment to measure two or more distances from which the distance between the most important light source (s) and the eyes of the user(s) can be calculated, and using at least such calculated distances to control the lighting.

According to a first aspect there is provided a control apparatus for controlling lighting within an environment. The control apparatus comprises the features recited in the independent claim directed to a control apparatus.

According to an embodiment the first and second distance sensors and the signal transmitter are located in a first physical device, the distance calculator is located in a second physical device different from said first physical device, and the signal transmitter is configured to transmit the first information in the form of said first control signal from the first physical device to the second physical device for enabling the second physical device further transmit the control information to the at least one of the at least one light source. This involves the advantage that various modular configurations can be presented.

According to an embodiment at least one of said first and second distance sensors is a radar. This involves the advantage that radar-based technologies such accurate short-range ranging and antenna beam forming and directing techniques can be used.

According to an embodiment at least one of the first and second distance sensors is a radar operative on at least one of the 24 GHz and 60 GHz radar frequency ranges. This involves the advantage that radar technology of known kind can be utilized, with the associated known technical advantages.

According to an embodiment at least one of said first and second distance sensors is a radar with a radar beam width between 15 and 45 degrees, said radar beam width being defined as the full width half maximum. This involves the advantage that reasonably accurate directionality can be obtained, while simultaneously avoiding excessively accurate requirements of pointing in right direction.

According to an embodiment the control apparatus comprises at least one swivel mount for making at least one of said first and second distance sensors point into a selectable direction. This involves the advantage that directionality of the sensor beams can be achieved with an easy and intuitive manner.

According to an embodiment the control apparatus comprises a memory for storing luminaire data indicative of an ability of said at least one light source to emit light. The lighting control unit may then be configured to receive said luminaire data and to compose said control information at least partly on the basis of said luminaire data. This involves the advantage that the arrangement can be made to utilize existing data at least partly automatically, and that changes in luminaire configuration can be accounted for.

According to an embodiment the control apparatus comprises a light sensor for measuring light at a location of said control apparatus. The lighting control unit may then be configured to receive third information indicative of the light measured by the light sensor and to compose the control information at least partly on the basis of the third information. This involves the advantage of enabling the determination of the control information more accurately, based on a further element of measurable information.

According to an embodiment the second distance sensor is configured to measure, in addition to the at least one second distance, at least one other measurable quantity of the at least one user. The signal transmitter may then be configured to receive fourth information indicative of the measurable quantity and to transmit a second control signal for controlling lighting within the environment on the basis of at least said fourth information. This involves the advantage of opening even more versatile possibilities of making the lighting of the environment follow the needs of users.

According to an embodiment the other measurable quantity is one of: information of whether a heartbeat of the at least one user can be detected; detected heartbeat rate of the at least one user; location of the head of the at least one user; information of detected physical movement of the at least one user; number of people in a measurable range. This involves the advantage of opening even more versatile possibilities of making the lighting of the environment follow the needs of users.

According to an embodiment the lighting control unit is configured to detect gestures of the a least one user from changes in the at least one measured second distance. The lighting control unit may then be configured to compose the control information at least partly on the basis of gestures so detected. This involves the advantage of providing the user with more versatile forms of controlling the lighting.

According to an embodiment the lighting control unit is configured to compose the control information at least partly on the basis of the number of users, distances to which were measured by said second distance sensor. This involves the advantage that the arrangement can adapt its operation on the basis of whether only one, only a few, or a plurality of users are present and in need of lighting of particular kind.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** illustrates distances in an illuminated environment,
**Figure 2** illustrates distances in another illuminated environment,
**Figure 3** illustrates distances in another illuminated environment,
**Figure 4** illustrates distances in another illuminated environment,
**Figure 5** illustrates distances in another illuminated environment,
**Figure 6** illustrates distances in another illuminated environment,
**Figure 7** illustrates a control apparatus according to an embodiment,
**Figure 8** illustrates a control apparatus according to another embodiment,
**Figure 9** illustrates a control apparatus according to another embodiment,
**Figure 10** illustrates a control apparatus according to another embodiment,
**Figure 11** illustrates a control apparatus according to another embodiment,
**Figure 12** illustrates the use of luminaire data, and
**Figure 13** illustrates an integrated, intelligent system for gathering information and performing versatile control.

### DETAILED DESCRIPTION

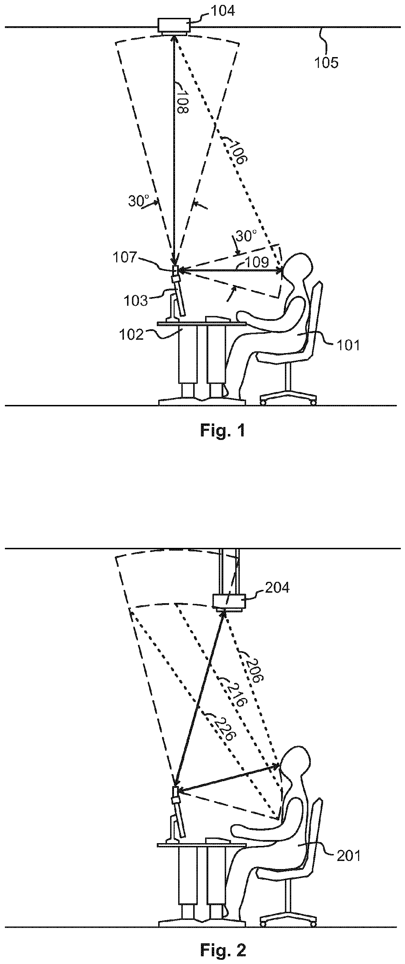

Fig. 1 illustrates an example of an environment to be illuminated with a lighting system. The environment may be for example an office or other indoor environment in which a user 101 is expected to work predominantly at a desk 102, on top of which is located a display 103. At least one light source is provided for illuminating the environment; in the example of fig. 1 a luminaire 104 installed in the ceiling 105 is such a light source.

The user 101 will experience the effects of lighting in the environment through his or her eyes. Consequently, the characteristics of light produced by the luminaire 104 are of particular importance at the location where the face of the user 101 is located. A straightforward example of a characteristic of the light is its perceived brightness, which is related to the distance 106 between the light source and the location where perceived brightness is evaluated. It would therefore be useful if the distance 106 could be somehow measured or at least estimated.

In fig. 1 a device 107 is installed at some location within the environment, here at the top of the display 103. The device 107 constitutes a control apparatus, or at least a part of a control apparatus. The device 107 comprises a first distance sensor (not separately shown in fig. 1) that is configured to measure at least one distance that is here called the first distance and represents the distance 108 between the device 107 (or, more generally, the control apparatus) and at least one light source in a respective first direction.

The device 108 comprises also a second distance sensor (not separately shown in fig. 1) that is configured to measure at least one so-called second distance, which represents the distance 109 between the device 107 (or, more generally, the control apparatus) and at least one user 101 in a respective second direction in the environment.

In fig. 1 it is assumed that both the first and the second distance sensors perform their measurements using some technology that defines a respective antenna beam for each measurement. A conventional way of describing an antenna beam is to announce its FWHM (Full Width at Half Maximum). This involves assuming that the antenna beam is rotationally symmetrical about a central axis, and has its maximum directional amplification in the direction of the central axis. The FWHM is the angle centered at the central axis in a cross section of the antenna beam within which the directional amplification falls to one half of its maximum value. In fig. 1 the FWHM of both antenna beams is 30 degrees, but this is only an example and does not limit this description in any way.

An example of a measurement technology that defines an antenna beam is radar technology, in which a radio signal is transmitted and reflections of the radio signal are received with a directional antenna. At least one of the first and second distance sensors may be a radar. Radar frequencies that are useful in relatively short distance measurements in environments like here include at least the 24 GHz and 60 GHz radar frequency ranges, so at least one of the first and second distance sensors may be a radar operative on at least one of these radar frequency ranges.

As an addition or alternative to just a single beam, a radar-based measurement may involve at least some kind of imaging capability. This means that from the received reflections of the radar signal it is possible to make at least some deductions about the number and/or shape of objects that caused the reflections. Imaging radar measurements may involve hardware aspects such as phased antenna arrays, and software aspects such as advanced signal processing.

An example of an alternative measurement technology that does not involve an antenna beam of similar kind is lidar. In a lidar-based distance measurement the transmitted signal consists of one or more narrow laser beams. The use of multiple beams and/or the capability of scanning the measurement direction of a lidar may result in the measurement producing a so-called point cloud, in which each point represents a distance measurement of its own. Some advantageous uses of lidar technology for the purposes considered here are described in more detail later in this text.

Further examples of possible measurement technologies include but are not limited to ultrasonic echo sounding.

Figs. 1 and 2 show how measuring the distance 108 with an antenna beam, such as a radar beam, introduces some inherent uncertainty into the measurement. The case of fig. 1 illustrates the optimal situation, in which the targets to which the distances 108 and 109 are to be measured are located in the directions of the central axes of the respective antenna beams. If the angle between the central axes of the antenna beams is known, it is relatively straightforward to calculate the correct value of the distance 106 from the measured distances 108 and 109 using basic geometry.

In fig. 2 both the light source (which here is a pendant-type luminaire 201) and the face of the user 201 are located off the central axes of the respective antenna beams. If no further directional information is available, the calculations must take into account that actually each measured target can be anywhere within the respective antenna beam: the light source 204 could quite as well be at the center of the vertical antenna beam or even at its left edge, and the face of the user 201 could be as low as the lower edge of the horizontal antenna beam. Thus the correct calculated distance could be anywhere within the range described by the three possible distances 206, 216, and 226.

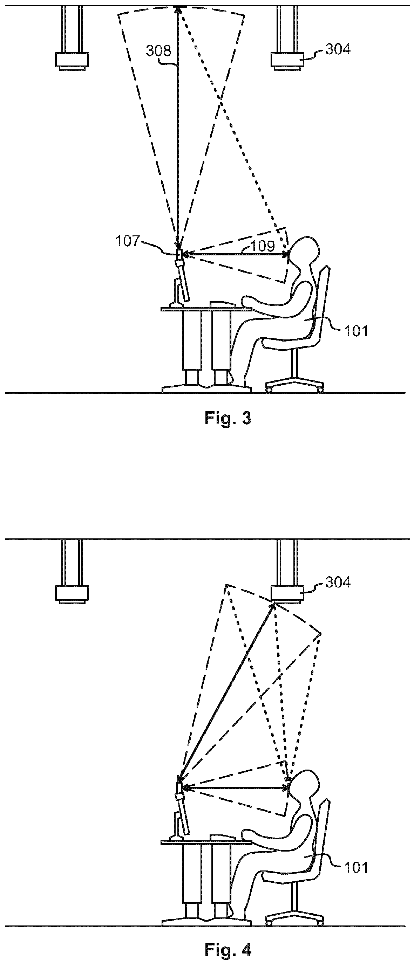

Figs. 3 and 4 show another similar comparison. In the environment of figs. 3 and 4 the lighting system comprises pendant-type luminaires, of which luminaire 304 is shown as an example. The second distance sensor is directed optimally in both cases, so that the second distance 109 between the device 107 and the face of the user 101 is measured correctly. In fig. 3 the first distance sensor is non-optimally directed, with the consequence that it actually measures the distance 308 to the ceiling instead. If this distance is unintendedly used to calculate the distance between a light source and the face of the user, an incorrect result will be obtained. In fig. 4 the first distance sensor is directed optimally, so that the pendant-type luminaire 304 closest to the user 101 is located on the central axis of the antenna beam of the first distance sensor. Also here there are multiple possible values for the calculated distance between the luminaire 304 and the face of the user 101, some of which are shown as pointed lines. The one between the central axes of the two antenna beams happens to be the right one.

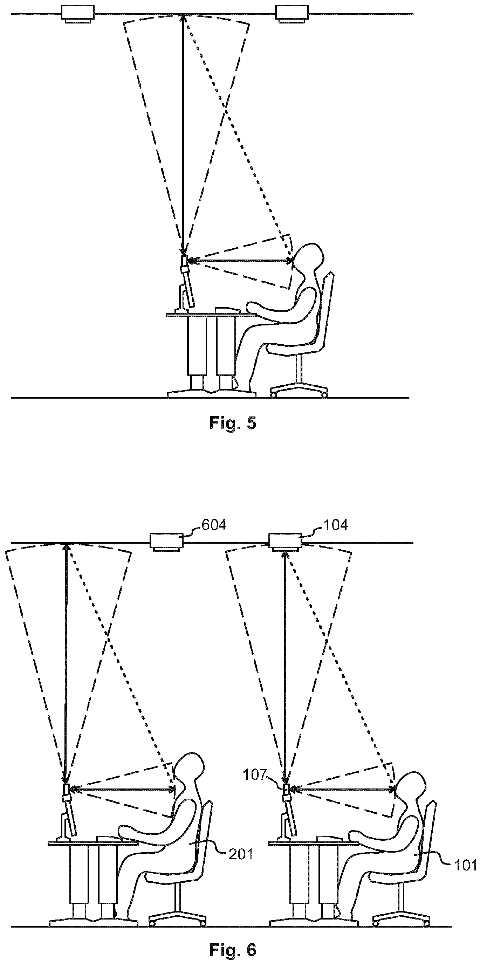

Figs. 5 and 6 show some further comparisons. In fig. 5 the situation is otherwise the same as in fig. 3, but the luminaires in the environment are not of the pendant type but installed at the ceiling level. Fig. 6 compares a tall user 201 and a normal-sized user 101 in an environment where one luminaire 104 happens to be directly above the device 107 that measures the distances related to the normal-sized user 101. Another luminaire 604 is obliquely above the desk of the tall user 201. Again it can be seen from the drawing that while the distance between the light source 104 and the face of the user 101 is relatively easy to calculate correctly for some cases, same kind of distance measurements may give rise to an incorrectly calculated distance in other cases.

In all cases illustrated in figs. 1 to 6 the purpose is to utilize information indicative of the first (device-to-light-source) and second (device-to-user) distances as at least one basis for controlling the lighting within the environment. The possible difficulties in calculating correctly the distance between a light source and the (face of the) user illustrates in the drawings can be taken into account in various ways. First, with reference to figs. 3 and 4, the control apparatus may comprise at least one swivel mount for making at least one of the first and second distance sensors point into a selectable direction. A technician responsible for setting up and configuring the lighting control system may utilize such swivel mount(s) to ensure that the distance sensors of each installed control apparatus point to those directions that seem to be most optimal in each case. Stickers, electronically displayed prompts, or other informative means may be used to remind even ordinary users to check, whether the distance sensors nearest to them seem to be appropriately directed.

Second, with reference to figs. 1 and 2, the capability of the distance sensor(s) of generating more information than just a single distance reading can be utilized, if such capability exists. If a radar with imaging capability is used, or if at least one of the distance sensors is a lidar that produces a point cloud, suitable pattern recognition algorithms may be used to recognize from the imaging information or point cloud for example forms that are typical of a human face. The second distance measurement may in such case be focused so that the measured second distance is the distance to the upper part of a human face so recognized. Similarly a pattern recognition algorithm may be used to recognize from the imaging information or point cloud some form that differs from the otherwise flat form of the ceiling, and utilize such a recognized form as the luminaire to which the first distance measurement should be focused.

Third, some kinds of distance sensors such as some short-distance (indoor) radar-based distance sensors operative on the 24 GHz and/or 60 GHz radar frequency ranges may be capable of generating additional information indicative of a phenomenon that occurs in humans and/or luminaires but not in other objects. A phenomenon meant here may be a detected movement of a person or object, detected thermal expansion of a luminaire that is switched on, or even a detected heartbeat rate of a human. If such a radar would generate distance measurement information that is otherwise ambiguous, i.e. indicative of several possible simultaneously measured distances, but one of such several possible distances comes associated with additional information of said kind, that distance may be selected as the unambiguous measured distance.

Fourth, some unavoidable indeterminacy or inaccuracy in calculating the distance between the light source and the user may be simply accepted by using some statistic methods, possibly associated with some known or assumed error margins. For example in cases like those in figs. 2, 5, and 6 one may decide to always use some average measured value, like the measured height to the ceiling (where luminaires are installed) and/or the measured average distance to the user. Averaging as a statistical method may utilize some known facts about users and/or environments: for example, users of workstations with tabletop display devices seldom look at their displays at distances shorter than about 60 cm but may be as far as one and a half meters, with the optimum distance being closer to the shorter than the longer end of this range.

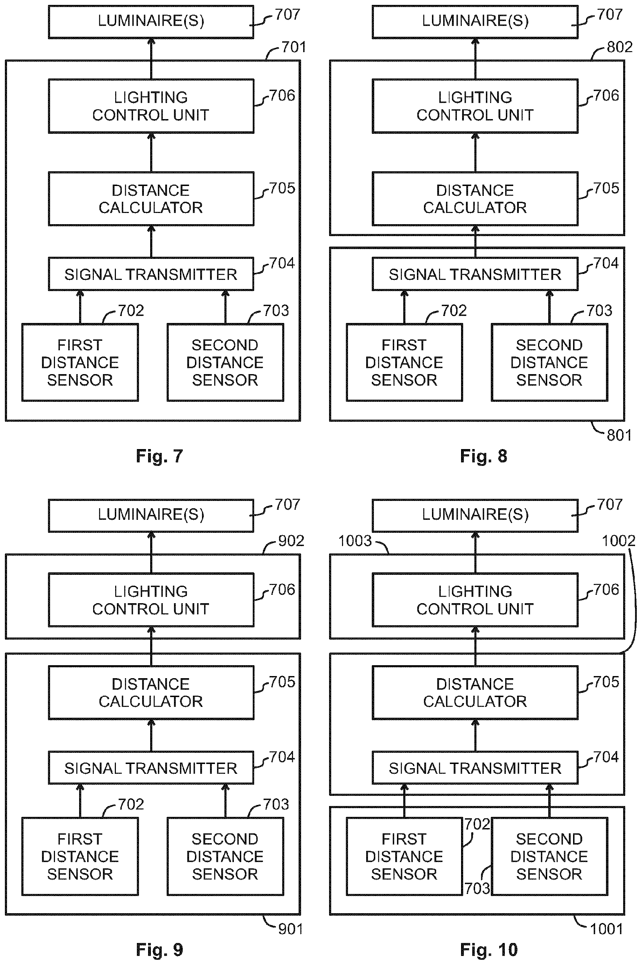

Information indicative of the measured first and second distances should serve as at least one basis of controlling the lighting in the environment, preferably so that such information enables making the perceived characteristics of light optimal for the user in all situations. For this purpose the control apparatus responsible for controlling the lighting comprises a signal transmitter configured to receive so-called first information, which is information indicative of the measured first and second distances. The signal transmitter is further configured to transmit a first control signal for controlling lighting within the environment on the basis of at least said first information. Some possible device configurations for implementing lighting control on this kind of a basis are considered in figs. 7 to 10.

Fig. 7 illustrates a control apparatus 701 for controlling lighting within an environment. The control apparatus 701 is a single device that comprises a first distance sensor 702 and a second distance sensor 703, a signal transmitter 704, a distance calculator 705, and a lighting control unit 706. The first distance sensor 702 is configured to measure at least one first distance between the control apparatus 701 and at least one light source in a respective first direction. The second distance sensor 703 is configured to measure at least one second distance between the control apparatus and at least one user in a respective second direction in said environment. The signal transmitter 704 is configured to receive first information indicative of said first and second distances and to transmit a first control signal for controlling lighting within said environment on the basis of at least said first information.

In the control apparatus shown in fig. 7 the transmission made by the signal transmitter 704 remains within the same physical device and goes to the distance calculator 705, which is configured to receive said first information and to calculate at least one distance between respective ones of said at least one light source and said at least one user based on said first information and on information of said first and second directions. The last-mentioned, i.e. information of said first and second directions, may consist of constant values permanently stored in a memory of the control apparatus 701, for example if the first and second distance sensors are fixedly installed in the control apparatus 701 so that they point at fixed directions. If the control apparatus comprises swivel mounts or other mechanical means for directing at least one of the first and second distance sensors to a desired direction, such swivel mounts or other mechanical means may comprise direction-detecting means that generate the information of the first and second directions. Yet another possibility is that a technician or other person who directs the first and second distance sensors inputs the information of the first and second directions using some kind of a configuration apparatus. A yet further possibility is that the information of said first and second directions comes as a part of the measurements of the first and second distances, for example so that they can be deduced from a point cloud generated with a lidar.

In the control apparatus of fig. 7 the lighting control unit 706 is configured to receive second information indicative of said calculated at least one distance and to transmit control information based on said second information to at least one light source. The light source(s) are shown as the luminaire(s) block 707 at the top of fig. 7.

Fig. 8 illustrates another control apparatus for controlling lighting within an environment. The control apparatus of fig. 8 comprises similar parts and functional blocks as that of fig. 7, but arranged in two discrete physical devices. The first and second distance sensors 702 and 703 and the signal transmitter 704 are located in a first physical device 801, and the distance calculator 705 and the lighting control unit 706 are located in a second physical device 802 that is different from the first physical device 802. Thus the signal transmitter 704 is configured to transmit said first information in the form of the first control signal from the first physical device 801 to the second physical device 802, for enabling the second physical device 802 further transmit the control information to the at least one light source in the luminaire(s) block 707.

Fig. 9 illustrates another control apparatus for controlling lighting within an environment. The control apparatus of fig. 9 comprises similar parts and functional blocks as those of figs. 7 and 8, again arranged in two discrete physical devices. The first and second distance sensors 702 and 703, the signal transmitter 704, and the distance calculator 705 are located in a first physical device 901, and the lighting control unit 706 is located in a second physical device 902 that is different from the first physical device 902. Thus the transmission of the first control signal from the signal transmitter 704 to the distance calculator 705 is still within the first physical device 901. The second information, i.e. the one indicative of the calculated distance(s), is transmitted to the second physical device 902, for enabling the lighting control unit 706 in the second physical device 902 to further transmit the control information to the at least one light source in the luminaire(s) block 707.

Fig. 10 illustrates another control apparatus for controlling lighting within an environment. The control apparatus of fig. 10 comprises similar parts and functional blocks as those of figs. 7 to 9, this time arranged in three discrete physical devices. The first and second distance sensors 702 and 703 are located in a first physical device 1001, the signal transmitter 704 and distance calculator 705 are located in the second physical device 1002, and the lighting control unit 706 is located in the third physical device 1003.

Concerning how the discrete physical devices are located in or close to the environment and what other duties and capabilities they may have, there are multiple possibilities. Starting from the unitary implementation of fig. 7, the device 701 may be for example a relatively small auxiliary device that can be conveniently installed at a suitable location within the environment, for example at or close to the upper edge of a display that often remains essentially stationary once its most convenient position has been found. Another example of a location for the device 701 is on a wall, divider, desk, windowsill, or other structure within the environment that can be expected to remain essentially stationary in relation to both the other structures and the user in his or her assumed most typical position. The location should be selected so that there are as few factors interfering with the distance measurements as possible. The transmissions from the lighting control unit 706 to the luminaire(s) 707 are most preferably wireless transmissions, so that the need for drawing control cables between other structures and the ceiling can be avoided. The operating power for the device 701 may be taken for example from an auxiliary device connector of the display or other electric apparatus if one exists, or through a separate power unit from a wall outlet, to which a power cord can be easily drawn along the same route as the power cord of the display or other electric apparatus. If the power consumption of the device is low enough, its operating power can be taken wirelessly through power harvesting, for example by utilizing the temperature difference between the display (or other installation support) and the surrounding room.

The two-device implementations of figs. 8 and 9 may have the first physical device 801 or 901 located somewhat similarly as explained above concerning the device 701 of fig. 7. Several possibilities exist concerning what the second physical device 802 or 902 is, where it is located, and what other duties and functionalities it may have. As one example, the second physical device 802 or 902 may be a desktop or laptop computer of the user, or one fixedly installed at a particular location within the environment. Since it is useful to have either a relatively fixed one-to-one relationship between such a second physical device and the luminaire(s) it should control, or some quick, easy, and reliable way of establishing such a relationship each time when needed, advantages can be gained if the second physical device - or at least some part of the functionalities associated with it - remains essentially bound to a fixed location. As an example, even if the laptop computer of the user is to act as the second physical device, a piece of location-bound equipment such as a docking station or a USB dongle may be provided that communicates with the laptop computer of the user and provides it with sufficient information about the luminaire(s) to be particularly controlled when residing at that location within the environment.

Another possibility is to have the second physical device 802 or 902 implemented as a part of the luminaire to be controlled. In such a case it is naturally trivial to maintain sufficient knowledge about which luminaire it is that is to be controlled. There remains the task of ensuring correctly directed communications between each first physical device 801 or 901 and the corresponding second physical device 802 or 902, but those can be ensured for example so that luminaires and their associated first physical devices are delivered for installation in ready-made pairs, and the installer takes care to install the correct first physical device at the appropriate location illuminated by the corresponding luminaire (in which the second physical device is located).

Yet another possibility is to utilize a centralized lighting controller, such as a DALI router or the like, as the second physical device 802 or 902. Sufficient communications between the first physical devices and such a centralized second physical device can be arranged for example with indoor wireless communications networks in which all participating nodes may act as wireless communication relays.

The three-device implementation of fig. 10 involves even more possible alternative ways of distributing the functionalities between devices. One example is such where the first physical device 1001 is as small and non-intrusive as possible, for installing at a visible location such as the top of a display or on a nearby wall. In such an embodiment the first physical device 1001 might include only the minimum number of components that are needed to make the distance measurements. The second physical device 1002 could be for example a support unit that provides the first physical device 1001 with operating power and therefore contains some slightly larger components, but is installed in a less visible location such as on the back surface of a display or on the underside of a table. Communication connections, transferring of operating power, etc. between the first and second physical devices must be established in some suitable way, but these are not separately shown in fig. 10 to maintain graphical clarity. The third physical device 1003 could be implemented for example in some of the ways that were explained above concerning the second physical device in figs. 8 or 9.

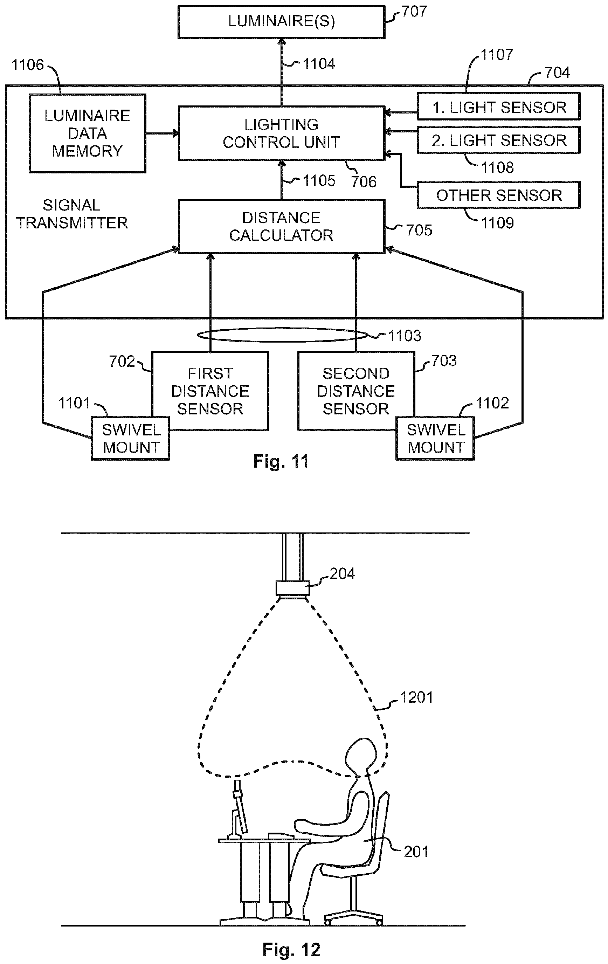

Fig. 11 illustrates another aspect of looking at possible components and functionalities that a control apparatus of the kind discussed here may comprise. The components and functionalities shown in fig. 11 are independent of how many physical devices are included in the control apparatus, so fig. 11 can be considered as pertinent to e.g. all or any of the alternative implementations according to figs. 7 to 10.

According to the aspect shown in fig. 11 the control apparatus comprises a first distance sensor 702 configured to measure at least one first distance between the control apparatus and at least one light source 707 in a respective first direction. The control apparatus comprises also a second distance sensor 703 configured to measure at least one second distance between the control apparatus and at least one user in a respective second direction in said environment. The control apparatus of fig. 11 comprises two swivel mounts 1101 and 1102 associated with the first and second distance sensors 702 and 703, for making at least one of said first and second distance sensors 702 and 703 point into a selectable direction.

The control apparatus of fig. 11 comprises a signal transmitter 704 configured to receive first information 1103 indicative of said first and second distances and to transmit a first control signal 1104 for controlling lighting within said environment on the basis of at least said first information 1103. According to the aspect shown in fig. 11 the signal transmitter 704 is considered to comprise also the distance calculator 705, which is configured to receive the first information 1103 and to calculate at least one distance between respective ones of said at least one light source 707 and said at least one user based on said first information and on information of said first and second directions. According to the aspect shown in fig. 11 the distance calculator 705 may receive the information of the first and second directions from the swivel mounts 1101 and 1102, which may be equipped with respective angle sensors.

Further according to the aspect shown in fig. 11 the signal transmitter 704 is considered to comprise the lighting control unit 706, which is configured to receive second information 1105 indicative of said calculated at least one distance and to transmit control information based on said second information 1105 to at least one of said at least one light source 707. Thus according to the aspect shown in fig. 11 the control information transmitted by the lighting control unit 706 is the same as the first control signal 1104 named above.

As has been explained earlier in this text, at least one of the first and second distance sensors 702 and 703 may be a radar; for example a radar operative on at least one of the 24 GHz and 60 GHz radar frequency ranges. In order to ensure a properly focused distance measurement, at least one of the first and second distance sensors 702 and 703 may be a radar with a radar beam width between 15 and 45 degrees, said radar beam width being defined as the full width half maximum.

According to the aspect shown in fig. 11 the control apparatus comprises a memory 1106 for storing luminaire data indicative of an ability of the at least one light source 707 to emit light. The lighting control unit 706 is configured to receive the luminaire data and to compose the control information (i.e. the first control signal 1104) at least partly on the basis of said luminaire data. This concept is described in more detail in the following with respect to fig. 12.

Fig. 12 resembles fig. 2 in that a user 201 is situated in an environment illuminated by a luminaire 204. The ability of the luminaire 204 to emit light can be characterized by referring to the so-called beam pattern 1201. Beam patterns of luminaires are typically published by the luminaire manufacturers, for example for the purpose of enabling lighting designers to select the appropriate types, numbers, and placing of luminaires in an environment to be constructed, so that illumination of the desired kind and amount can be achieved. The beam pattern can be described as predefined information indicative of how much light the luminaire emits in each direction. The beam pattern may be announced for some predefined input power level, like for the maximum allowed input power of the luminaire. Alternatively or additionally there may be announced beam pattern information as a function of a range of possible input powers.

Beam pattern information may be particularly useful in composing the control information for the at least one light source 707 if the lighting control unit 706 has some means of determining, in which direction from the luminaire the user's face is located. Determining the direction may be enabled for example by distance sensors that have sufficient directional resolution, like a lidar for example. The lighting control unit may have received the direction of the light source also in the form of previously input configuration information, or it may simply know or assume that the light source is directly above it in the ceiling. Measuring the distances to the light source and to the (face of the) user may enable the lighting control unit to calculate, in which direction (in relation to the central axis of the beam pattern) the user is located. If the lighting control unit now has information about the beam pattern, from which it knows or can calculate the amount of light that the light source emits in that particular direction in which the user is located, it may set the brightness of the light source that the amount of light in the direction of the user is at a desired level.

The luminaire data in the memory 1106 may have originated from various sources. It may involve manually input configuration information, meaning that at some stage during the installing and/or configuring of the lighting system a person responsible for configuring the lighting system has stored the appropriate information to the memory 1106. If the environment to be illuminated is a part of a building for which a BIM (Building Information Modelling) model of sufficient accuracy has been created and maintained, the memory 1106 may receive the appropriate information from the BIM model. Some luminaires may spontaneously transmit their identification information, and possibly also other information like beam pattern information, to nearby other devices as a part of an autoconfiguration process. The way in which the luminaire data has ended up in the memory 1106 is not in any way critical to operation of the kind described above, so any alternative is basically catered for here.

The control apparatus of fig. 11 comprises a light sensor 1107 for measuring light at a location of the control apparatus. The light sensor 1107 is shown in fig. 11 as a part of the entity labeled as the signal transmitter 704, but it could be located more freely, just as has been explained earlier concerning the distance sensors 702 and 703. The lighting control unit 706 may be configured to receive information, designated here as the third information for unambiguous reference, indicative of the light measured by the light sensor 1107. The lighting control unit 706 may be configured to compose the control information (i.e. the first control signal 1104) at least partly on the basis of said third information.

Measuring light with a light sensor 1107 can augment the control principles described so far in various ways. For example, measuring the light at the location of the control apparatus may give information about the amount of light originating from other sources than the luminaire that the control apparatus directly controls, so that it may decide about the amount of controlled light taking such elsewhereoriginating light into account. Daylight harvesting is an example, in which the control apparatus aims at there being some predetermined total amount of light, some of which may come from natural sources in the form of daylight, so that only the remaining part of the light need to be produced artificially. Measuring light at the location of the control apparatus may also give information about how other controlled luminaires behave in the vicinity, which may then trigger further action like switching on the light to some predefined level to provide comfort lighting to a neighboring user even if there is nobody present in the area illuminated by the directly controlled luminaire.

Using the light sensor 1107 to measure light may also aid in using the luminaire data stored in the memory 1106, when the lighting control unit 706 composes the control information on the basis of luminaire data. The output of the light sensor 1107 may give an indication about how the beam pattern affects the control apparatus: for example, setting the controlled light to some known level, measuring the amount of resulting light and comparing to the known form of the beam pattern may indicate, in which direction the control apparatus is from the light source.

The control apparatus of fig. 11 comprises also a second light sensor 1108, which may further aid in performing actions of the kind explained above where measurements of light are involved. Taking the last-mentioned example, if the control apparatus is capable of making two independent measurements of light at slightly different locations (like closer to and further from the light source), it may be able to deduce more accurately, in which part of the beam pattern it is located. Additionally or alternatively the use of two light sensors 1107 and 1108 may help the lighting control unit 706 to deduce, which part of the measured light comes from artificial lighting and which part of it comes from natural lighting.

The second distance sensor 703 may be configured to measure, in addition to the basic distance to the user, at least one other measurable quantity of the at least one user. The signal transmitter 704 may be configured to receive information, designated here the fourth information for unambiguous reference, indicative of such a measurable quantity and to transmit a second control signal for controlling lighting within the environment on the basis of at least said fourth information. Examples of a measurable quantity meant here include but are not limited to information of whether a heartbeat of said at least one user can be detected; detected heartbeat rate of said at least one user; location of the head of said at least one user; information of detected physical movement of said at least one user; and the number of people in a measurable range. The first-mentioned, i.e. information of whether a heartbeat of said at least one user can be detected, may be used for further conclusions for example about whether the user is sitting still or moving. If a user is not moving, his or her heartbeat is easier to detect using some of the methods described here than if the user is moving.

The fourth information mentioned above, i.e. information about a measurable quantity of the user, may be used for further informed decisions about what kind of lighting would be the most useful and advantageous for the user. For example, if the control apparatus detects an increasing heartbeat of an otherwise stationary user, it may interpret it as a sign of an increasing level of stress or anxiety and tune the colour and/or intensity of lighting towards values that are known to have a relaxing effect on humans. As another example, if the user is detected to assume a posture that indicates tiredness or boredom, such as a half-reclining sitting position, and/or if the user only moves very little during a certain period of time, the control apparatus may tune the colour and/or intensity of lighting towards values that are known to stimulate humans towards better awareness. As yet another example, if the location of the head of the nearest user can be detected more accurately than just as a distance, the calculations about the distance between the light source and the user's head can be made correspondingly with better accuracy with the obvious consequences in better controlling the amount of light to the desired level.

The lighting control unit 706 may be configured to detect gestures of the user. Such detecting can be made from changes in the measured distance to the user, and the results can be used for further ways of controlling the lighting. For example the user may deliberately dim the lights up or down by waving his or her hands towards or away from the distance sensor. Consequently, the lighting control unit 706 may compose the control information (i.e. the first control signal 1104) at least partly on the basis of gestures so detected. Another "gesture" that can be detected is the movement when the user leaves his or her workstation, in which case the control apparatus may dim down the light relatively quickly because the light is currently not needed at all.

The distance measurement to a user can be used also for other purposes than controlling the lighting, especially in such cases where the computer of the user has a role as one of the devices included in the control apparatus so that the computer is aware of the distance measurements at least to some extent. As an example, if the computer of the user is aware that a distance measurement indicates the presence of a user even if the user has not touched the keyboard, mouse, or other input means for a while, it may decide not to go into sleep mode or similar because the user, although inactive from the computer's viewpoint, is still present and may be just e.g. speaking on the phone or doing other things.

If the measurement of distance to user(s) is versatile enough to indicate distances to two or more users within the same environment, the lighting control unit 706 may be configured to compose the control information (i.e. the first control signal 1104) at least partly on the basis of the number of users, distances to which were measured by the respective distance sensor(s). Such a feature may be useful for example when the environment to be illuminated is a room that is used alternatively for a single user to work in or for multiple users to have a meeting. The lighting control unit 706 may then automatically set the lighting to a working mode or to a meeting mode, depending on whether only one user or a number of users were detected.

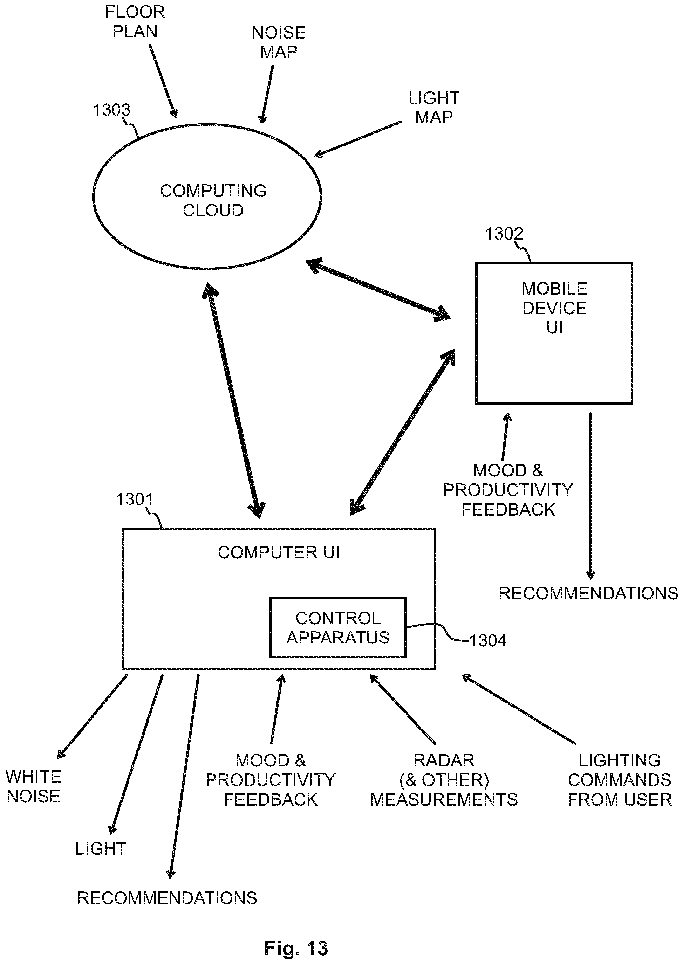

Fig. 13 illustrates a system in which a control apparatus according to some embodiment described above is integrated into a larger arrangement for improving the overall conditions around and wellbeing of a user. Parts of the system are a computer-based user interface 1301, a mobile device based user interface 1302, and a computing cloud 1303. The user interfaces 1301 and 1302 are considered in a wide sense, as comprising all means and functionalities through which some interactions with a human user are possible using a computer workstation (1301) or a mobile device (1302). Examples of mobile devices include but are not limited to smartphones, portable digital assistants, integrated wearable electronics items, activity watches, biointegrated electronic sensors, and the like.

A control apparatus 1304 according to some embodiment described above is shown as a part of the computer-based interface 1301. The control apparatus 1304 may be implemented for example according to the model shown earlier in fig. 8, so that there is a distance sensor unit installed close to and having short-distance communications connections with a computer workstation. Input information that the computer-based interface 1301 receives includes radar and possible other measurements made by the control apparatus 1304. The computer-based interface 1301 may also receive lighting commands given by the user, and various indications of the mood and productivity of the user. Examples of the last-mentioned may involve e.g. the rate at which the user is producing text in a word processing program or other digital products that the user is working on; detected movements and other activity of the user; detected behavioral patterns of the user; and the like.

Outputs of the computer-based interface 1301 may include for example the amount and quality of light produced at the location of the user; recommendations for the user to e.g. have a break, perform some control on e.g. ventilation, window blinds, or other environmental factor that cannot be controlled automatically, or do some intermittent office workout; or other output such as acoustic white noise that can be used to even out acoustic disturbances to a certain extent. The mobile device based user interface 1302 can be used for many similar purposes, with particular advantage taken of the fact that the mobile device may be constantly worn by the user so that it can give more accurate information about e.g. behavioral aspects and direct physiological measurements concerning the user. The computing cloud 1303 may be used to provide additional environmental information, such as maps of detected conditions in other locations within the same environment that could be taken into account in setting the local conditions at the location of the user. The computing cloud 1303 can also be used as an artificial intelligence based deep learning environment in which information is gathered what is happening in each individually controlled working spot. Such artificial intelligence based learning may result in more intelligent and better adapted ways in which the local control apparatus should operate, and these can be downloaded to the local devices so that their operation is continuously improved.

## Claims

1. Control apparatus (701, 1304) for controlling lighting (707) within an environment, comprising:
- a first distance sensor (702) configured to measure at least one first distance (108) between the control apparatus (701, 1304) and at least one light source (104) in a respective first direction,
- a second distance sensor (703) configured to measure at least one second distance in a respective second direction in said environment,
- a signal transmitter (704) configured to receive first information (1103) indicative of said first and second distances and to transmit a first control signal (1104) for controlling lighting (707) within said environment on the basis of at least said first information (1103),
**characterized in that**:
- said second distance is a distance (109) between the control apparatus (701, 1304) and at least one user (101),
- the control apparatus (701, 1304) comprises a distance calculator (705) configured to receive said first information (1103) and to calculate at least one distance between respective ones of said at least one light source (104) and said at least one user (101) based on said first information (1103) and on information of said first and second directions,
- the control apparatus (701, 1304) comprises a lighting control unit (706) configured to receive second information (1105) indicative of said calculated at least one distance and to transmit control information based on said second information to at least one of said at least one light source, and
- said first control signal (1104) is one of: said first information (1103) in transmitted form, said control information.

2. Control apparatus according to claim 1, wherein:
- said first (702) and second (703) distance sensors and the signal transmitter (704) are located in a first physical device (801),
- said distance calculator (705) is located in a second physical device (802) different from said first physical device (801), and
- said signal transmitter (704) is configured to transmit said first information (1103) in the form of said first control signal (1104) from said first physical device (801) to said second physical device (802) for enabling said second physical device (802) further transmit said control information to said at least one of said at least one light source (707).

3. Control apparatus according to any of the preceding claims, wherein at least one of said first (702) and second (703) distance sensors is a radar.

4. Control apparatus according to claim 3, wherein at least one of said first (702) and second (703) distance sensors is a radar operative on at least one of the 24 GHz and 60 GHz radar frequency ranges.

5. Control apparatus according to any of claims 3 or 4, wherein at least one of said first (702) and second (703) distance sensors is a radar with a radar beam width between 15 and 45 degrees, said radar beam width being defined as the full width half maximum.

6. Control apparatus according to any of the preceding claims, comprising at least one swivel mount (1101, 1102) for making at least one of said first (702) and second (703) distance sensors point into a selectable direction.

7. Control apparatus according to any of the preceding claims, wherein:
- the control apparatus comprises a memory (1106) for storing luminaire data indicative of an ability of said at least one light source to emit light,
- said lighting control unit (706) is configured to receive said luminaire data and to compose said control information at least partly on the basis of said luminaire data.

8. Control apparatus according to any of the preceding claims, wherein:
- the control apparatus comprises a light sensor (1107, 1108) for measuring light at a location of said control apparatus,
- said lighting control unit (706) is configured to receive third information indicative of the light measured by said light sensor (1107, 1108) and to compose said control information at least partly on the basis of said third information.

9. Control apparatus according to any of the preceding claims, wherein:
- said second distance sensor (703) is configured to measure, in addition to said at least one second distance, at least one other measurable quantity of said at least one user (101), and
- said signal transmitter (704) is configured to receive fourth information indicative of said measurable quantity and to transmit a second control signal for controlling lighting (707) within said environment on the basis of at least said fourth information.

10. Control apparatus according to claim 9, wherein said other measurable quantity is one of:
- information of whether a heartbeat of said at least one user (101) can be detected,
- detected heartbeat rate of said at least one user (101),
- location of the head of said at least one user (101),
- information of detected physical movement of said at least one user (101),
- number of people in a measurable range.

11. Control apparatus according to any of the preceding claims, wherein:
- said lighting control unit (706) is configured to detect gestures of said a least one user (101) from changes in said at least one measured second distance, and
- said lighting control unit (706) is configured to compose said control information at least partly on the basis of gestures so detected.

12. Control apparatus according to any of the preceding claims, wherein:
- said lighting control unit (706) is configured to compose said control information at least partly on the basis of the number of users, distances to which were measured by said second distance sensor (703).

## Patentansprüche

1. Steuervorrichtung (701, 1304) zur Steuerung der Beleuchtung (707) innerhalb einer Umgebung, umfassend:
- einen ersten Abstandssensor (702), der konfiguriert ist, um mindestens einen ersten Abstand (108) zwischen der Steuervorrichtung (701, 1304) und mindestens einer Lichtquelle (104) in einer jeweiligen ersten Richtung zu messen,
- einen zweiten Abstandssensor (703), der konfiguriert ist, um mindestens einen zweiten Abstand in einer jeweils zweiten Richtung in der Umgebung zu messen,
- einen Signalgeber (704), der konfiguriert ist, um eine erste Information (1103) zu empfangen, die die ersten und zweiten Abstände anzeigt, und ein erstes Steuersignal (1104) zur Steuerung der Beleuchtung (707) innerhalb der Umgebung auf der Grundlage zumindest der ersten Information (1103) zu senden,
**dadurch gekennzeichnet, dass**:
- der zweite Abstand ein Abstand (109) zwischen der Steuervorrichtung (701, 1304) und mindestens einem Benutzer (101) ist,
- die Steuervorrichtung (701, 1304) einen Abstandsrechner (705) umfasst, der konfiguriert ist, um die erste Information (1103) zu empfangen und mindestens einen Abstand zwischen den jeweiligen der mindestens einen Lichtquelle (104) und dem mindestens einen Benutzer (101) auf der Grundlage der ersten Information (1103) und der Informationen der ersten und zweiten Richtung zu berechnen,
- die Steuervorrichtung (701, 1304) eine Beleuchtungssteuereinheit (706) umfasst, die konfiguriert ist, um eine zweite Information (1105) zu empfangen, die den berechneten mindestens einen Abstand anzeigt, und um Steuerinformationen auf der Grundlage der zweiten Information an mindestens eine der mindestens einen Lichtquellen zu übertragen, und
- das erste Steuersignal (1104) ist eines von: die erste Information (1103) in übertragener Form, die Steuerinformation.

2. Steuervorrichtung nach Anspruch 1, wobei:
- wobei sich der erste (702) und der zweite (703) Abstandssensor und der Signalgeber (704) in einer ersten physikalischen Vorrichtung (801) befinden,
- der Abstandsrechner (705) sich in einer zweiten physikalischen Vorrichtung (802) befindet, die sich von der ersten physikalischen Vorrichtung (801) unterscheidet, und
- der Signalgeber (704) konfiguriert ist, um die erste Information (1103) in Form des ersten Steuersignals (1104) von der ersten physikalischen Vorrichtung (801) an die zweite physikalische Vorrichtung (802) zu übertragen, um die zweite physikalische Vorrichtung (802) in die Lage zu versetzen, die Steuerinformation weiter an die mindestens eine der mindestens einen Lichtquellen (707) zu übertragen.

3. Steuervorrichtung nach einem der vorhergehenden Ansprüche, wobei mindestens einer der ersten (702) und zweiten (703) Abstandssensoren ein Radar ist.

4. Steuervorrichtung nach Anspruch 3, wobei mindestens einer der ersten (702) und zweiten (703) Abstandssensoren ein Radar ist, das auf mindestens einem der 24 GHz und 60 GHz Radarfrequenzbereiche arbeitet.

5. Steuervorrichtung nach einem der Ansprüche 3 oder 4, wobei mindestens einer der ersten (702) und zweiten (703) Abstandssensoren ein Radar mit einer Radarstrahlbreite zwischen 15 und 45 Grad ist, wobei die Radarstrahlbreite als das Halbwertsbreite definiert ist.

6. Steuervorrichtung nach einem der vorhergehenden Ansprüche, umfassend mindestens eine Schwenkhalterung (1101, 1102), um mindestens einen der ersten (702) und zweiten (703) Abstandssensoren in eine wählbare Richtung zeigen zu lassen.

7. Steuervorrichtung nach einem der vorhergehenden Ansprüche, wobei:
- die Steuervorrichtung einen Speicher (1106) zum Speichern von Leuchtendaten umfasst, die auf eine Fähigkeit der mindestens einen Lichtquelle hinweisen, Licht zu emittieren,
- die Beleuchtungssteuereinheit (706) konfiguriert ist, um die Leuchtendaten zu empfangen und die Steuerinformationen zumindest teilweise auf der Grundlage der Leuchtendaten zusammenzustellen.

8. Steuervorrichtung nach einem der vorhergehenden Ansprüche, wobei:
- die Steuervorrichtung einen Lichtsensor (1107, 1108) zum Messen von Licht an einer Stelle der Steuervorrichtung umfasst,
- die Beleuchtungssteuereinheit (706) konfiguriert ist, um eine dritte Information zu empfangen, die auf das von dem Lichtsensor (1107, 1108) gemessene Licht hinweist, und die Steuerinformationen zumindest teilweise auf der Grundlage der dritten Information zusammenzustellen.

9. Steuervorrichtung nach einem der vorhergehenden Ansprüche, wobei:
- der zweite Abstandssensor (703) konfiguriert ist, um zusätzlich zu dem mindestens einen zweiten Abstand mindestens eine weitere messbare Größe des mindestens einen Benutzers (101) zu messen, und
- der Signalgeber (704) konfiguriert ist, um eine vierte Information zu empfangen, die die messbare Größe anzeigt, und ein zweites Steuersignal zur Steuerung der Beleuchtung (707) innerhalb der Umgebung auf der Grundlage mindestens der vierten Information zu senden.

10. Steuervorrichtung nach Anspruch 9, wobei die andere messbare Größe eine der folgenden ist:
- Information, ob ein Herzschlag des mindestens einen Benutzers (101) detektiert werden kann,
- detektierte Herzschlagfrequenz des mindestens einen Benutzers (101),
- Standort des Kopfes des mindestens einen Benutzers (101),
- Informationen über die detektierte physische Bewegung des mindestens einen Benutzers (101),
- Anzahl der Personen in einem messbaren Bereich.

11. Steuervorrichtung nach einem der vorhergehenden Ansprüche, wobei:
- die Beleuchtungssteuereinheit (706) konfiguriert ist, um Gesten des mindestens einen Benutzers (101) von Änderungen in dem mindestens einen gemessenen zweiten Abstand zu erfassen, und
- die Beleuchtungssteuereinheit (706) konfiguriert ist, um die Steuerinformationen zumindest teilweise auf der Grundlage von Gesten zusammenzusetzen, die auf diese Weise erfasst werden.

12. Steuervorrichtung nach einem der vorhergehenden Ansprüche, wobei:
- die Beleuchtungssteuereinheit (706) ist so konfiguriert, dass sie die Steuerinformationen zumindest teilweise auf der Grundlage der Anzahl der Benutzer zusammenstellt, zu denen die Abstände durch den zweiten Abstandssensor (703) gemessen wurden.

## Revendications

1. Appareil de commande (701, 1304) pour commander un éclairage (707) dans un environnement, comprenant :
- un premier capteur de distance (702) configuré pour mesurer au moins une première distance (108) entre l'appareil de commande (701, 1304) et au moins une source de lumière (104) dans une première direction respective,
- un deuxième capteur de distance (703) configuré pour mesurer au moins une deuxième distance dans une deuxième direction respective dans ledit environnement,
- un transmetteur de signaux (704) configuré pour recevoir de premières informations (1103) indiquant lesdites première et deuxième distances et pour transmettre un premier signal de commande (1104) pour commander l'éclairage (707) dans ledit environnement sur la base d'au moins lesdites premières informations (1103),
**caractérisé en ce que** :
- ladite deuxième distance est une distance (109) entre l'appareil de commande (701, 1304) et au moins un utilisateur (101),
- l'appareil de commande (701, 1304) comprend un calculateur de distance (705) configuré pour recevoir lesdites premières informations (1103) et pour calculer au moins une distance entre des sources de lumière respectives de ladite au moins une source de lumière (104) et ledit au moins un utilisateur (101) sur la base desdites premières informations (1103) et d'informations desdites première et deuxième directions,
- l'appareil de commande (701, 1304) comprend une unité (706) de commande d'éclairage configurée pour recevoir des deuxièmes informations (1105) indiquant ladite au moins une distance calculée et pour transmettre des informations de commande sur la base desdites deuxièmes informations à au moins une source de lumière de ladite au moins une source de lumière, et
- ledit premier signal de commande (1104) est l'un parmi : lesdites premières informations (1103) sous une forme transmise, lesdites informations de commande.

2. Appareil de commande selon la revendication 1, dans lequel :
- lesdits premier (702) et deuxième (703) capteurs de distance et le transmetteur de signaux (704) sont situés dans un premier dispositif physique (801),
- ledit calculateur de distance (705) est situé dans un deuxième dispositif physique (802) différent dudit premier dispositif physique (801), et
- ledit transmetteur de signaux (704) est configuré pour transmettre lesdites premières informations (1103) sous la forme dudit premier signal de commande (1104) en provenance dudit premier dispositif physique (801) audit deuxième dispositif physique (802) pour permettre audit deuxième dispositif physique (802) de transmettre ensuite lesdites informations de commande à ladite au moins une de ladite au moins une source (707) de lumière.

3. Appareil de commande selon l'une quelconque des revendications précédentes, dans lequel au moins l'un desdits premier (702) et deuxième (703) capteurs de distance est un radar.

4. Appareil de commande selon la revendication 3, dans lequel au moins l'un desdits premier (702) et deuxième (703) capteurs de distance est un radar fonctionnant sur au moins l'une des plages de fréquences radar de 24 GHz et 60 GHz.

5. Appareil de commande selon l'une quelconque des revendications 3 ou 4, dans lequel au moins l'un desdits premier (702) et deuxième (703) capteurs de distance est un radar avec une largeur de faisceau radar entre 15 et 45 degrés, ladite largeur de faisceau radar étant définie comme la largeur à mi-hauteur.

6. Appareil de commande selon l'une quelconque des revendications précédentes, comprenant au moins un support pivotant (1101, 1102) pour amener au moins l'un desdits premier (702) et deuxième (703) capteurs de distance à pointer dans une direction sélectionnable.

7. Appareil de commande selon l'une quelconque des revendications précédentes, dans lequel :
- l'appareil de commande comprend une mémoire (1106) pour stocker des données de luminaire indiquant une capacité de ladite au moins une source de lumière à émettre de la lumière,
- ladite unité (706) de commande d'éclairage est configurée pour recevoir lesdites données de luminaire et pour composer lesdites informations de commande au moins partiellement sur la base desdites données de luminaire.

8. Appareil de commande selon l'une quelconque des revendications précédentes, dans lequel :
- l'appareil de commande comprend un capteur (1107, 1108) de lumière pour mesurer une lumière à un emplacement dudit appareil de commande,
- ladite unité (706) de commande d'éclairage est configurée pour recevoir de troisièmes informations indiquant la lumière mesurée par ledit capteur (1107, 1108) de lumière et pour composer lesdites informations de commande au moins partiellement sur la base desdites troisièmes informations.

9. Appareil de commande selon l'une quelconque des revendications précédentes, dans lequel :
- ledit deuxième capteur de distance (703) est configuré pour mesurer, en plus de ladite au moins une deuxième distance, au moins une autre quantité mesurable dudit au moins un utilisateur (101), et
- ledit transmetteur de signaux (704) est configuré pour recevoir de quatrièmes informations indiquant ladite quantité mesurable et pour transmettre un deuxième signal de commande pour commander un éclairage (707) dans ledit environnement sur la base d'au moins lesdites quatrièmes informations.

10. Appareil de commande selon la revendication 9, dans lequel ladite autre quantité mesurable est l'une parmi :
- des informations indiquant si un battement de coeur dudit au moins un utilisateur (101) peut être détecté,
- une fréquence cardiaque détectée dudit au moins un utilisateur (101),
- un emplacement de la tête dudit au moins un utilisateur (101),
- des informations d'un mouvement physique détecté dudit au moins un utilisateur (101),
- un nombre de personnes dans une plage mesurable.

11. Appareil de commande selon l'une quelconque des revendications précédentes, dans lequel :
- ladite unité (706) de commande d'éclairage est configurée pour détecter des gestes dudit au moins un utilisateur (101) à partir de changements de ladite au moins une deuxième distance mesurée, et
- ladite unité (706) de commande d'éclairage est configurée pour composer lesdites informations de commande au moins partiellement sur la base des gestes ainsi détectés.

12. Appareil de commande selon l'une quelconque des revendications précédentes, dans lequel :
- ladite unité (706) de commande d'éclairage est configurée pour composer lesdites informations de commande au moins partiellement sur la base du nombre d'utilisateurs, des distances par rapport à ceux-ci ayant été mesurées par ledit deuxième capteur de distance (703).
